# EUROPEAN PATENT SPECIFICATION

(11) **EP 4 533 167 B1**
(45) Date of publication and mention of the grant of the patent: **08.04.2026**
(21) Application number: 23735483.2
(22) Date of filing: 31.05.2023
(51) Int. Cl.: G02B 27/01

(54) **WAVEGUIDE STACK ARCHITECTURE WITH HIGH RED EFFICIENCY**
WELLENLEITER-STAPEL-ARCHITEKTUR MIT HOHER ROT-EFFIZIENZ
ARCHITECTURE DE PILE DE GUIDES D'ONDES À HAUTE EFFICACITÉ ROUGE

(30) Priority: 03.06.2022 US 202263348848 P
(43) Date of publication of application: 09.04.2025
(73) Proprietor: Google LLC, Mountain View, CA 94043 (US)
(72) Inventor: LOWNEY, Joseph Daniel, Mountain View, California 94043 (US)
(74) Representative: Maikowski & Ninnemann Patentanwälte Partnerschaft mbB
(86) International application number: PCT/US2023/024018
(87) International publication number: WO 2023/235402

(56) References cited:
- WO-A1-2019/143414
- US-A1- 2017 307 886
- US-A1- 2021 124 170
- US-A1- 2021 294 014
- US-A1- 2021 341 743
- US-A1- 2021 382 221

## Description

### BACKGROUND

An augmented reality (AR) display system typically includes a light engine assembly, such as liquid crystal on silicon (LCoS), digital light processing (DLP), laser beam scanning (LBS), or micro-light emitting diode (uLED), and an optical combiner such as a waveguide stack. Some display devices use multiple waveguides to guide display light to a user's eye for AR applications. For example, near-eye display systems such as head-mounted display (HMD) and wearable heads-up display (WHUD) devices employ waveguides to direct light from a micro-display to the user's eye. Some conventional architectures for waveguides employ separate waveguides for each of the visible colors, separating blue, green, and red light into separate waveguides. Near-eye display systems are disclosed in US 2021/341743 A1, WO 2019/143414 A1 and US 2021/382221 A1.

### SUMMARY OF EMBODIMENTS

A claimed solution is specified by a near-eye display system according to claim 1 and by a method according to claim 8. Dependent claims specify embodiments thereof. In some implementations, with the first waveguide being configured to guide red light to a user's eye and the second waveguide being configured to guide at least one of blue light and green light to the user's eye , the first waveguide is positioned closer to the user's eye and the second waveguide is positioned farther from the user's eye when the near-eye display system is worn by the user.

In some implementations, the first waveguide includes nanostructures that comprise resin having a first refractive index and the second waveguide includes nanostructures that comprise resin having a second refractive index lower than the first refractive index.

The first waveguide may include a substrate having a first refractive index and the second waveguide may include a substrate having a second refractive index lower than the first refractive index.

The first waveguide is thicker than the second waveguide according to the claimed invention. In some implementations, the first waveguide includes gratings with continuously modulated depths. In some implementations, the first waveguide includes gratings having a first number of unique etch depths and the second waveguide includes gratings having a second number of unique etch depths lower than the first number. The waveguide positioned farthest from the user's eye when the near-eye display system is worn by the user has a metallic coating in some implementations.

In accordance with the invention, the near-eye display system includes a first waveguide configured to guide red light to a user's eye and a second waveguide configured to guide at least one of blue light and green light to the user's eye, wherein the first waveguide is thicker than the second waveguide. In some implementations, the first waveguide is positioned closer to the user's eye and the second waveguide is positioned farther from the user's eye when the near-eye display system is worn by a user.

In some implementations, the first waveguide includes nanostructures that comprise resin having a first refractive index and the second waveguide includes nanostructures that comprise resin having a second refractive index lower than the first refractive index.

The first waveguide may include a substrate having a first refractive index and the second waveguide may include a substrate having a second refractive index lower than the first refractive index.

In some implementations, the first waveguide includes gratings with continuously modulated depths. In some implementations, the first waveguide includes gratings having a first number of unique etch depths and the second waveguide includes gratings having a second number of unique etch depths lower than the first number. The waveguide positioned farthest from the user's eye when the near-eye display system is worn by the user has a metallic coating in some implementations.

In accordance with another aspect, a near-eye display system includes a first waveguide configured to guide red light to a user's eye and a second waveguide configured to guide at least one of blue light and green light to the user's eye, wherein the first waveguide has a first refractive index and the second waveguide has a second refractive index lower than the first refractive index.

The first waveguide may include nanostructures made with resin having the first refractive index and the second waveguide may include nanostructures made with resin having the second refractive index. The first waveguide may include a substrate having the first refractive index and the second waveguide may include a substrate having the second refractive index.

The first waveguide may be positioned closer to the user's eye and the second waveguide may be positioned farther from the user's eye when the near-eye display system is worn by the user. The first waveguide is thicker than the second waveguide according to the claimed invention.

In accordance with another aspect, a method includes guiding red display light from a display to a user's eye via a first waveguide of a near-eye display system. The method further includes guiding at least one of blue display light and green display light from the display to the user's eye via a second waveguide of the near-eye display system, wherein the first waveguide is thicker than the second waveguide according to the claimed invention.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 shows an example eyewear display system employing a light engine to project multiplexed colors for a frame and a waveguide with gratings that are tunable to each color in accordance with some embodiments.
FIG. 2 is a diagram illustrating basic functions of an optical combiner in accordance with some embodiments.
FIG. 3 is a diagram illustrating the placement of an incoupler and outcoupler of an optical combiner within an eyeglasses lens in accordance with some embodiments.
FIG. 4 illustrates color non-uniformity of a single waveguide.
FIG. 5 is a block diagram illustrating placement of a waveguide for red light at toward an eye-facing direction in a waveguide stack in accordance with some embodiments.
FIG. 6 illustrates a waveguide stack including a waveguide for red light and a waveguide for blue and green light in accordance with some embodiments.
FIG. 7 illustrates a grating cross-section of a waveguide in accordance with some embodiments.
FIG. 8 illustrates a cross-sectional view of a grating structure etched in the surface of a refractive waveguide in accordance with some embodiments.

### DETAILED DESCRIPTION

Eyewear display devices potentially have multiple practical and leisure applications, but the development and adoption of wearable electronic display devices have been limited by constraints imposed by the optics, aesthetics, manufacturing process, thickness, field of view (FOV), and prescription lens limitations of the optical systems used to implement existing display devices. For example, the geometry and physical constraints of conventional designs result in displays having relatively small FOVs and relatively thick optical combiners.

Wearable display devices for presenting AR content typically employ an optical combiner waveguide (also referred to as a "lightguide") to convey and magnify display light emitted by a display to a user's eye while also permitting light from the real-world scene to pass through the waveguide to the user's eye, resulting in the imagery represented by the display light overlaying the real-world scene from the perspective of the user. Typically, the waveguide relies on total internal reflection (TIR) to convey light received from the display via incoupling features at one end of the waveguide to outcoupling features facing the user's eye on the other end of the waveguide. The outcoupling features are configured to direct light beams from within the waveguide out of the waveguide such that the user perceives the projected light beams as images displayed in a field of view (FOV) area of a display component located in front of a user's eye, such as a lens of an eyewear display device having the general shape and size of eyeglasses. The light beams exiting from the waveguide then overlap at an eye relief distance from the waveguide, forming a "pupil" within which a virtual image generated by the image source can be viewed.

A waveguide typically includes three sets of linear gratings - an incoupler grating, an exit pupil expander, and an outcoupler grating. Because diffractive gratings are dispersive, a grating with high efficiency for one part of the color frequency spectrum (e.g., blue light) often has low efficiency for another part of the color frequency spectrum (e.g., red light). To address the differences in efficiency, some designs employ a multi-waveguide architecture in which each color of light is separately guided into a different waveguide in a stack. For example, some designs include a separate waveguide for each of red, blue, and green wavelengths. Taken together, the stack of waveguides combines the light into a full color display.

Typically, architectures for waveguides that employ separate waveguides for each of the visible colors place the waveguide for red light furthest from the eye of a user because the waveguide for red light will tend to couple in and/or scatter green light (and possibly blue light) in addition to coupling in red light, whereas waveguides for blue and green light tend not to couple in red light as efficiently. Thus, placing the waveguide for red light furthest from the user's eye tends to couple more aggregate light into the waveguide stack as intended. However, as AR displays evolve toward the smallest form factor, it is likely that the dominant light engine technology will soon be uLED light engines, which are typically inefficient at producing red light due to fundamental material constraints.

Embodiments described herein provide techniques for increasing efficiency of coupling red light into and out of a waveguide stack. To enhance the efficiency of guiding red light to a user's eye, a near-eye display system employs a waveguide architecture that includes a separate waveguide for red light that is optimized through one or more of placement of the separate waveguide for red light within a waveguide stack, materials used for nanostructures or a substrate of the separate waveguide for red light, thickness of the separate waveguide for red light, and grating characteristics used for the separate waveguide for red light.

In some embodiments, the separate waveguide for red light is positioned closer to the user's eye and a waveguide for blue and/or green light is positioned farther from the user's eye when the near-eye display system is worn by the user. Furthermore, in the embodiments according to the invention, the separate waveguide for red light is thicker than the waveguide for blue and/or green light. In addition, in some embodiments, the separate waveguide for red light has a refractive index that is higher than a refractive index of the waveguide for blue and/or green light.

In some embodiments, the separate waveguide for red light has a substrate and/or resin nanostructures having a refractive index that is higher than the refractive index of the substrate and/or resin nanostructures for the waveguide for blue and/or green light. In some embodiments, the separate waveguide for red light includes gratings with continuously modulated depths. The gratings of the separate waveguide for red light have a number of unique etch depths that is higher than a number of unique etch depths of the waveguide for blue and/or green light in some embodiments. In some embodiments, the waveguide positioned farthest from the user's eye when the near-eye display system is worn by the user has a metallic coating.

Each of the above-mentioned individual characteristics of the separate waveguide for red light (e.g., placement within the waveguide stack, thickness, refractive index, and grating characteristics) enhances the coupling efficiency for red light. It will be appreciated that combining two or more of the above-mentioned characteristics further enhances the coupling efficiency for red light. Thus, for example, placing the separate waveguide for red light closer to the user's eye than the waveguide for blue and/or green light enhances the coupling efficiency for red light, and placing a thicker separate waveguide for red light closer to the user's eye than a thinner waveguide for blue and/or green light further enhances coupling efficiency for red light.

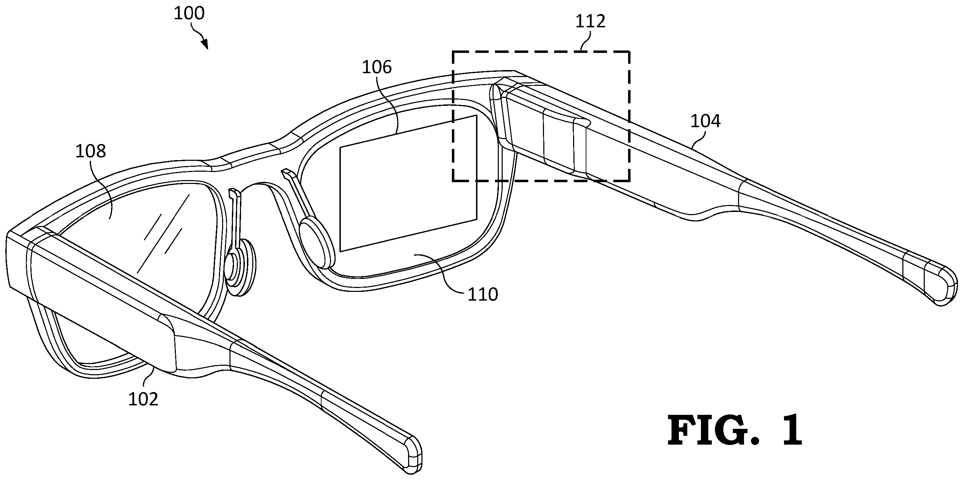

FIG. 1 illustrates an example eyewear display system 100 (also referred to as display system 100) employing a waveguide stack with a separate waveguide for red light that is optimized through one or more of placement of the separate waveguide for red light nearer to a user's eye within a waveguide stack, higher refractive index materials used for nanostructures or a substrate of the separate waveguide for red light, increased thickness of the separate waveguide for red light, and grating characteristics used for the separate waveguide for red light in accordance with some embodiments. The display system 100 has a support structure 102 that includes an arm 104, which houses a light engine (e.g., a laser projector, a micro-LED projector, a Liquid Crystal on Silicon (LCOS) projector, or the like), also referred to herein as a microdisplay. The light engine is configured to project images toward the eye of a user via a waveguide stack, such that the user perceives the projected images as being displayed in a field of view (FOV) area 106 of a display at one or both of spherical lens elements 108, 110. In the depicted embodiment, the display system 100 is a near-eye display system in the form of an eyewear display device in which the support structure 102 is configured to be worn on the head of a user and has a general shape and appearance (that is, form factor) of an eyeglasses (e.g., sunglasses) frame.

The support structure 102 contains or otherwise includes various components to facilitate the projection of such images toward the eye of the user, such as a light engine and a waveguide stack. In some embodiments, the support structure 102 further includes various sensors, such as one or more front-facing cameras, rear-facing cameras, other light sensors, motion sensors, accelerometers, and the like. In some embodiments, the support structure 102 includes one or more radio frequency (RF) interfaces or other wireless interfaces, such as a Bluetooth(TM) interface, a WiFi interface, and the like. Further, in some embodiments, the support structure 102 further includes one or more batteries or other portable power sources for supplying power to the electrical components of the display system 100. In some embodiments, some or all of these components of the display system 100 are fully or partially contained within an inner volume of support structure 102, such as within the arm 104 in region 112 of the support structure 102. It should be noted that while an example form factor is depicted, it will be appreciated that in other embodiments the display system 100 may have a different shape and appearance from the eyeglasses frame depicted in FIG. 1. It should be understood that instances of the term "or" herein refer to the non-exclusive definition of "or", unless noted otherwise. For example, herein the phrase "X or Y" means "either X, or Y, or both".

One or both of the spherical lens elements 108, 110 are used by the display system 100 to provide an augmented reality (AR) display in which rendered graphical content can be superimposed over or otherwise provided in conjunction with a real-world view as perceived by the user through the spherical lens elements 108, 110. For example, a light engine of the display system 100 uses light to form a perceptible image or series of images by projecting the light onto the eye of the user via a projector of the light engine, a waveguide stack formed at least partially in the corresponding spherical lens element 108 or 110, and one or more optical elements (e.g., one or more scan mirrors, or one or more optical relays, that are disposed between the projector and the waveguide), according to various embodiments.

One or both of the spherical lens elements 108, 110 includes at least a portion of a waveguide stack that routes display light received by an incoupler of each waveguide of the waveguide stack to an outcoupler of each waveguide of the waveguide stack, which outputs the display light toward an eye of a user of the display system 100. The display light is modulated and projected onto the eye of the user such that the user perceives the display light as an image. In addition, each of the spherical lens elements 108, 110 is sufficiently transparent to allow a user to see through the spherical lens elements to provide a field of view of the user's real-world environment such that the image appears superimposed over at least a portion of the real-world environment.

In some embodiments, the projector of the light engine of the display system 100 is a digital light processing-based projector, a scanning laser projector, or any combination of a modulative light source, such as a laser or one or more light-emitting diodes (LEDs), and a dynamic reflector mechanism such as one or more dynamic scanners, reflective panels, or digital light processors (DLPs). In some embodiments, the projector includes a micro-display panel, such as a micro-LED display panel (e.g., a micro-AMOLED display panel, or a micro inorganic LED (i-LED) display panel) or a micro-Liquid Crystal Display (LCD) display panel (e.g., a Low Temperature PolySilicon (LTPS) LCD display panel, a High Temperature PolySilicon (HTPS) LCD display panel, or an In-Plane Switching (IPS) LCD display panel). In some embodiments, the projector includes a Liquid Crystal on Silicon (LCOS) display panel. In some embodiments, a display panel of the projector is configured to output light (representing an image or portion of an image for display) into the waveguide stack of the display system. The waveguide stack expands the light and outputs the light toward the eye of the user.

The display system 100 may include a processor (not shown) that is communicatively coupled to each of the electrical components in the display system 100, including but not limited to the projector. The processor can be any suitable component which can execute instructions or logic, including but not limited to a micro-controller, microprocessor, multi-core processor, integrated-circuit, ASIC, FPGA, programmable logic device, or any appropriate combination of these components. The display system 100 can include a non-transitory processor-readable storage medium, which may store processor readable instructions thereon, which when executed by the processor can cause the processor to execute any number of functions, including causing the projector to output light representative of display content to be viewed by a user, receiving user input, managing user interfaces, generating display content to be presented to a user, receiving and managing data from any sensors carried by the display system 100, receiving and processing external data and messages, and any other functions as appropriate for a given application. The non-transitory processor-readable storage medium can be any suitable component, which can store instructions, logic, or programs, including but not limited to non-volatile or volatile memory, read only memory (ROM), random access memory (RAM), FLASH memory, registers, magnetic hard disk, optical disk, or any combination of these components. The projector outputs light toward the FOV area 106 of the display system 100 via the waveguide stack.

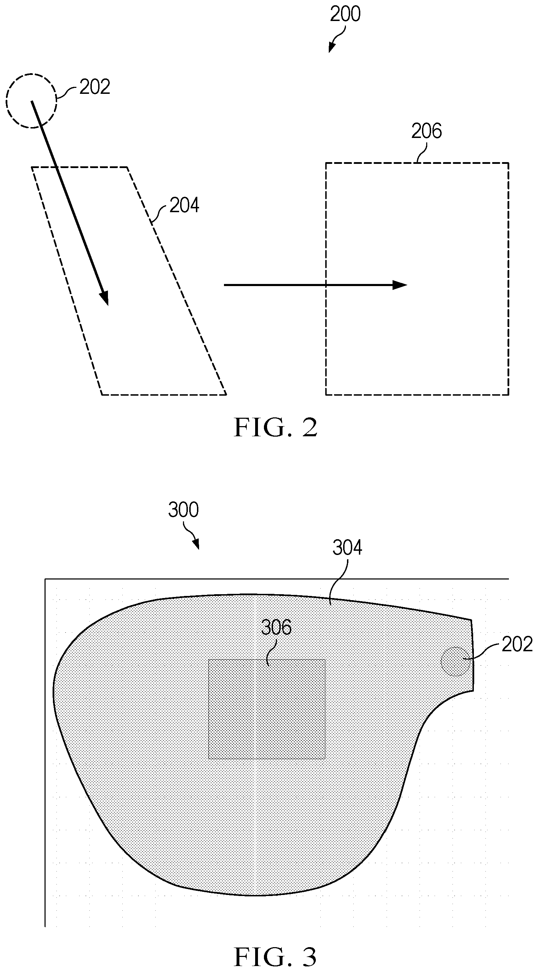

Each waveguide in the waveguide stack typically includes an input coupler (IC) grating, an exit pupil expander (EPE), and an output coupler (OC) grating, as illustrated in FIG. 2. FIG. 2 is a diagram illustrating basic functions of an optical combiner 200 in accordance with some embodiments. A waveguide-based optical combiner (or "waveguide combiner") is often used in AR-based near-eye displays to provide a view of the real world overlayed with static imagery or video (recorded or rendered). As illustrated in FIG. 2, such optical combiners typically employ an IC 202 to receive display light from a display source (not shown), an EPE 204 to increase the size of the display exit pupil, and an OC 206 to direct the resulting display light toward a user's eye. In some embodiments, a near-eye display system employs a waveguide stack including a separate waveguide for red light and one or more waveguides for blue and/or green light. Each of the waveguides in the waveguide stack includes an IC 202, an EPE 204, and an OC 206.

In other embodiments, a waveguide may consist of an IC and an OC that also performs pupil replication to expand the size of the display exit pupil, as shown in FIG. 3. FIG. 3 is a diagram illustrating the placement of the IC 202 and an OC 306 that combines exit pupil expansion and outcoupling functions of an optical combiner 300 within an eyeglasses lens 304 in accordance with some embodiments.

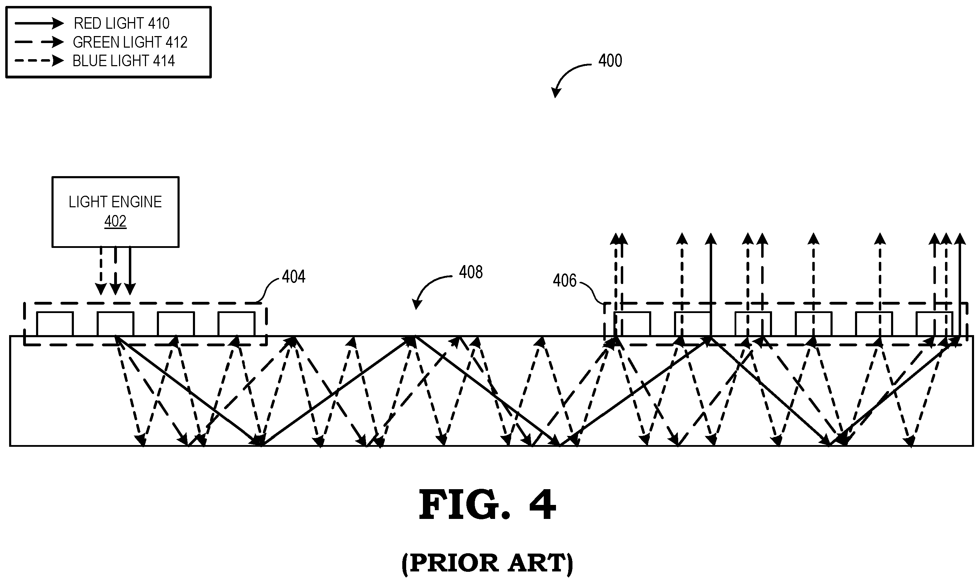

FIG. 4 illustrates color non-uniformity of a projection system 400 having a single waveguide 408 for all colors with an incoupler 404 and an outcoupler 406. The projection system 400 may be included in a display system, such as the eyewear display system 100 of FIG. 1. As shown, the projection system 400 includes a light engine 402 and the waveguide 408.

The light engine 402 includes a micro-display panel that is configured to output display light corresponding to an image or a portion of an image to be displayed by the projection system 400. While the light engine 402 is used to generate light for images to be displayed, in some cases, the projection system 400 instead includes a different type of image source, such as a scanning laser projector. In some cases, the light engine 402 includes one or more discrete optical elements such as lenses, mirrors, or the like, configured to change the direction of the display light, to apply an optical function to the display light (e.g., collimation, focusing, or the like), or both. The light engine 402 is configured to project red light 410, green light 412, and blue light 414 for an image such as for a frame of video.

The term "waveguide," as used herein, will be understood to mean a combiner using one or more of total internal reflection (TIR), specialized filters, or reflective surfaces, to transfer light from an incoupler (such as the incoupler 404) to an outcoupler (such as the outcoupler 406). In some display applications, the light is a collimated image, and the waveguide transfers and replicates the collimated image to the eye. In general, the terms "incoupler" and "outcoupler" will be understood to refer to any type of optical grating structure, including, but not limited to, diffraction gratings, reflective facets, holograms, holographic optical elements (e.g., optical elements using one or more holograms), volume diffraction gratings, volume holograms, surface relief diffraction gratings, or surface relief holograms. In some embodiments, a given incoupler or outcoupler is configured as a transmissive grating (e.g., a transmissive diffraction grating or a transmissive holographic grating) that causes the incoupler or outcoupler to transmit light and to apply designed optical function(s) to the light during the transmission. In some embodiments, a given incoupler or outcoupler is a reflective grating (e.g., a reflective diffraction grating or a reflective holographic grating) that causes the incoupler or outcoupler to reflect light and to apply designed optical function(s) to the light during the reflection.

In the illustrated example, each of the incoupler 404 and the outcoupler 406 are formed from diffraction gratings having elements (such as grooves) that are formed in or on material (e.g., silicon, glass, polymer, or the like) of the waveguide 408 via, for example, mechanical techniques (e.g., scoring) or chemical techniques (e.g., lithography). The gratings have a pitch, which is the lateral separation between adjacent grating elements. Light of different wavelengths interacts differently with the gratings. For example, red light 410, which has a relatively long wavelength, is diffracted at a larger angle with respect to a grating having a given pitch, whereas blue light 414, which has a relatively short wavelength, is diffracted at a smaller angle with respect to a grating having the same pitch. Thus, the grating has higher diffraction efficiency for blue light 414 than for red light 410 or green light 412, and blue light 414 has higher pupil replication than red light 410 or green light 412. These effects contribute to low waveguide efficiency for red light 410 and color non-uniformity that negatively impacts the user experience. The low red light efficiency creates a bottleneck for overall waveguide brightness and the color non-uniformity results in a color drift from red at the left of the eyebox to blue at the right of the eyebox.

During operation of the projection system 400, red, green, and blue display light 410, 412, 414 forming an image to be displayed is output by the light engine 402. The red, green, and blue display light 410, 412, 414 passes into the waveguide 408 via the incoupler 404. The incoupler 404 redirects the red, green, and blue display light 410, 412, 414 into the waveguide 408 and toward the outcoupler 406 via TIR. In some cases, an exit pupil expander (not shown) integrated within the waveguide 408 redirects the red, green, and blue display light 410, 412, 414 toward the outcoupler 406 of the waveguide 408, which projects the red, green, and blue display light 410, 412, 414 out of the waveguide 408 and, for example, toward an eye of a user.

However, due to the differences in the interactions between light of various wavelengths with the gratings of the incoupler 404 and outcoupler 406, light of different colors undergoes a different number of bounces within the waveguide 408, resulting in non-uniformity of colors exiting the waveguide 408 via the outcoupler 406. For example, as illustrated in FIG. 4, red light 410 undergoes six bounces within the waveguide 408, with two of the bounces against the outcoupler 406 at which the red light 410 is coupled out of the waveguide 408 toward the eye of a user. Green light 412, by contrast, undergoes ten bounces within the waveguide 408, with three of the bounces against the outcoupler 406 at which the green light 412 is coupled out of the waveguide 408 toward the eye of the user. Blue light 414, having the shortest wavelength, undergoes the most bounces (26) within the waveguide 408, of which six bounces are against the outcoupler 406, from which the blue light 414 is coupled out of the waveguide 408 toward the eye of the user. Thus, the ratio of bounces of red light 410 to green light 12 to blue light 14 exiting the waveguide 408 for the incoupler 404 and outcoupler 406 is approximately 2:3:6, resulting in relatively low efficiency for red light. To increase the coupling efficiency for red light, embodiments described herein include a separate waveguide for red light and one or more waveguides for blue and green light.

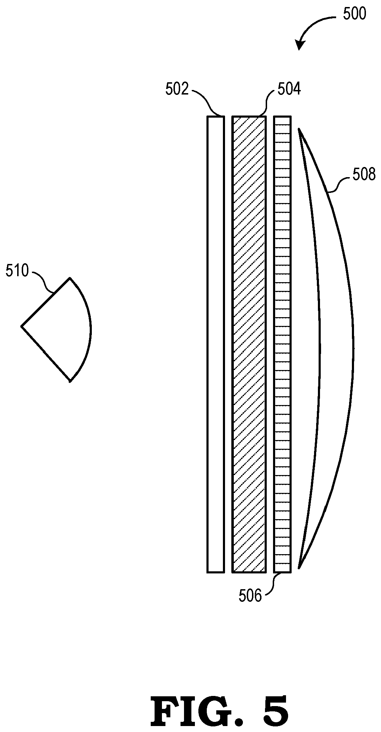

FIG. 5 is a block diagram illustrating placement of a waveguide for red light (referred to herein as red waveguide 504) closest to an eye-facing direction in a waveguide stack 500 in accordance with some embodiments. In the illustrated example, the waveguide stack 500 includes two waveguides: the red waveguide 504 and a waveguide for green and blue light (referred to as blue/green waveguide 506. The red waveguide 504 is placed closer to a user's eye 510 and proximate to an eye-side facing lens element 502 and the blue/green waveguide 506 is placed farther from the user's eye 510, proximate to a world-side facing lens element 508.

Placing the red waveguide 504 closest to the user's eye in the waveguide stack 500 tends to couple more red light into the waveguide stack 500, improving image quality as light engine technology evolves toward uLED light engines, which are typically inefficient at producing red light.

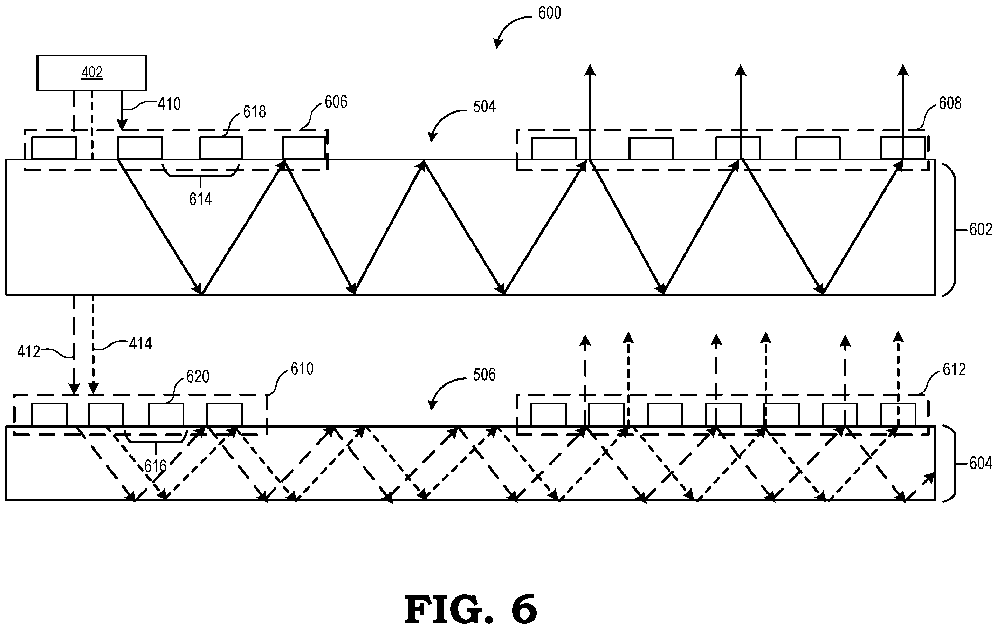

FIG. 6 illustrates a projection system 600 including the red waveguide 504 and the blue/green waveguide 506 in accordance with some embodiments. To improve efficiency in coupling red light into, through, and out of the projection system 600, the red waveguide 504 is positioned closer to the eye-facing side of the projection system 600, is thicker than the blue/green waveguide 506, and has larger incoupling and outcoupling grating features than the blue/green waveguide 506. The red waveguide 504 has a thickness 602 and the blue/green waveguide 506 has a thickness 604. The red waveguide 504 includes an incoupling region 606 and an outcoupling region 608 that include a number of grating features 618 defined by a grating interval, or pitch 614. The blue/green waveguide 506 includes an incoupling region 610 and an outcoupling region 612 that include a number of grating features 620 defined by a pitch 616.

In the illustrated embodiment, the thickness 602 of the red waveguide 504 is thicker than the thickness 604 of the blue/green waveguide 506. Although thinner waveguides are generally preferred from a product standpoint (i.e., to keep the product as thin and lightweight as possible), increasing the thickness of the red waveguide 504 increases efficiency by reducing the "double bounce" effect at the input coupler. A double bounce occurs when light that is coupled into the waveguide through the IC grating re-encounters the IC grating (through which the light is outcoupled from the waveguide and effectively lost) after experiencing one or more instances of TIR.

Further, in the illustrated example, the pitch 614 and size of the grating features 618 of the incoupling region 606 and the outcoupling region 608 of the red waveguide 504 are larger than the pitch 616 and size of the grating features 620 of the incoupling region 610 and the outcoupling region 612. The longer pitch 614 and size of grating features 618 tune the red waveguide 504 to the longer wavelengths of red light, whereas the shorter pitch 616 and smaller features grating 620 of the incoupling region 610 and outcoupling region 612 of the blue/green waveguide 506 tune the blue/green waveguide 506 to the shorter wavelengths of blue light 414 and green light 412. By tuning the incoupling region 606, the outcoupling region 608, and the thickness 602 of the red waveguide 504 to accommodate red light 410 and by tuning the incoupling region 610, the outcoupling region 612, and the thickness 604 of the blue/green waveguide 506 to accommodate blue light 414 and green light 412, the projection system 600 achieves a same number of bounces for each of blue light 414, green light 412, and red light 410 out of the outcoupling region 608 and the outcoupling region 612, resulting in more efficient coupling of all colors of display light and enhanced color uniformity at an eyebox of the projection system 600.

In order to maintain a small net form factor of the projection system 600, some embodiments of the stacked waveguide include a thinner blue/green waveguide 506 and a thicker red waveguide 504. For example, in some embodiments the blue/green waveguide 506 is approximately 300um thick and the red waveguide 504 is approximately 600um thick. Thus, the blue/green waveguide 506 will be less efficient (due to a greater number of double bounce losses) than the red waveguide 504. However, such a trade-off may be favorable for pairing with a uLED light engine.

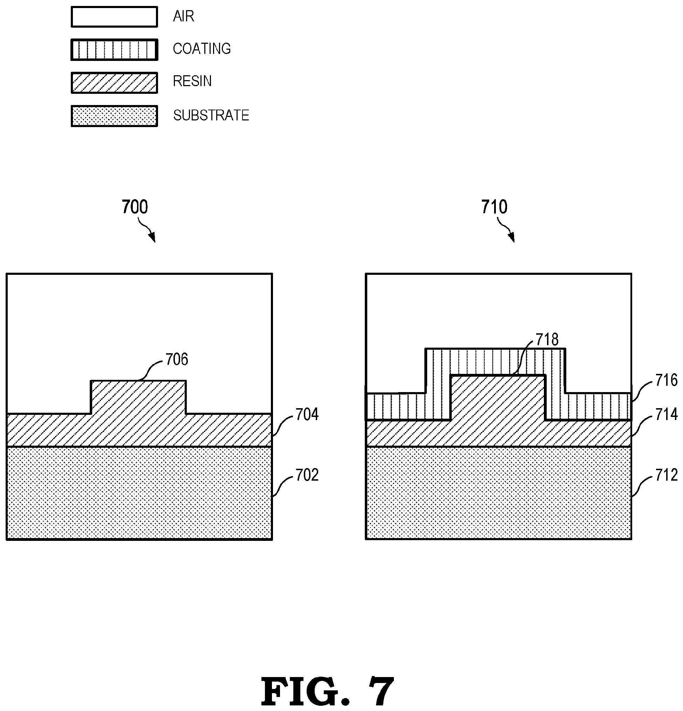

FIG. 7 illustrates a grating cross-section 700 of a red waveguide and a grating cross-section 710 of a blue/green waveguide in accordance with some embodiments. For both the red waveguide and the blue/green waveguide, each of the IC grating, EPE, and OC grating is composed of nanostructures to couple and guide light into, through, and out of the waveguide. In some embodiments, the waveguide includes a substrate made of glass with a resin polymer layer on which the nanostructures are fabricated. For example, in the illustrated embodiments, the grating cross-section 700 of the red waveguide includes a substrate 702 and a resin polymer layer 704. The grating cross-section 710 of the blue/green waveguide includes a substrate 712 and a resin polymer layer 704.

In some embodiments, to enhance the efficiency of incoupling, guiding, and outcoupling red light, the waveguide for red light includes grating nanostructures (such as nanostructure 706) that are fabricated using a resin polymer layer 704 that has a higher index of refraction than the resin polymer layer 714 of the blue/green waveguide. Typically, waveguides eschew using high refractive index resin when possible, because it is more difficult to use, has lower yield, and may increase haze. However, some embodiments employ a hybrid waveguide stack including a waveguide for red light that includes nanostructures that are fabricated using a higher refractive index resin layer 704 and one or more waveguides for blue and green light (e.g., a waveguide for blue light and a waveguide for green light, or a single waveguide for blue and green light) that include nanostructures (such as nanostructure 718) that are fabricated using a lower refractive index resin polymer layer 714.

Some embodiments additionally employ a higher refractive index substrate 702 for the waveguide for red light than the refractive index of a substrate 712 of the blue/green waveguide to further increase the efficiency of incoupling, guiding, and outcoupling red light. For example, matching the refractive index of the substrate 702 to the refractive index of the resin 704 or grating material will increase the efficiency of the waveguide for red light. In addition, using a higher refractive index substrate 702 results in the total internal reflection (TIR) angle within the substrate 702 being closer to normal incidence, causing more frequent grating interactions which yield higher extraction efficiency.

In some embodiments, the IC grating and OC grating for the waveguide for red light are manufactured using a different method than etching the resin polymer layer 704. For example, in some embodiments, the IC grating and the OC grating are manufactured by directly etching into a high index glass substrate 702 or etching into titanium oxide, which has a relatively high refractive index. Such manufacturing methods improve efficiency of the waveguide for red light.

In some embodiments, the input coupler of the waveguide that is furthest from the user's eye (e.g., the blue/green waveguide) has a coating 716 of either a high-refractive-index film (e.g., titanium dioxide) or a metallic film (e.g., silver, gold, or aluminum) to enhance in-coupling efficiency reflectivity into the waveguide stack. In some embodiments, the coating is a conformal coating (made of, e.g., titanium dioxide) over the imprinted resin polymer layer 714 or direct-etched substrate material.

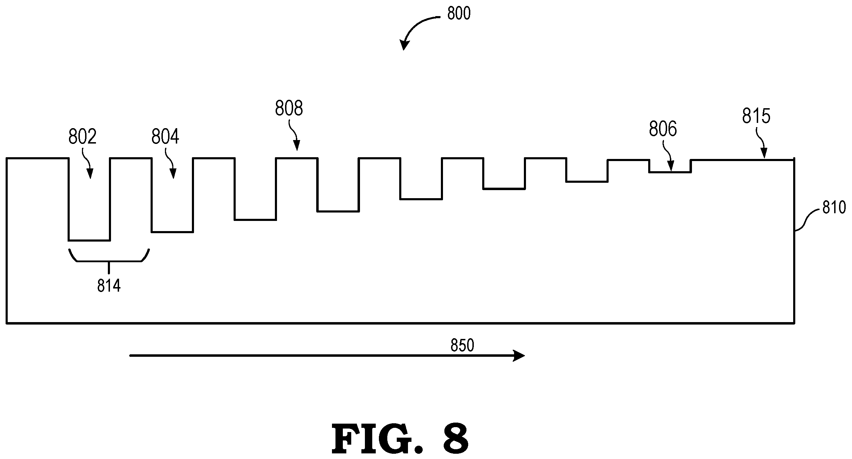

FIG. 8 illustrates a cross-sectional view of a grating structure 800 etched in an optical substrate 810 of a red waveguide, such as for use as an incoupler or outcoupler of the red waveguide 504. In some embodiments, a separate waveguide for red light is manufactured using more expensive processes that yield higher efficiency or improved uniformity. For example, in some embodiments, the red waveguide 504 is manufactured using continuous depth modulation, in which the depths of grating etchings smoothly increase or decrease over the length of the grating. In other embodiments, the red waveguide 504 is manufactured using a higher number of unique etch depths compared to the waveguide(s) for blue and green light. Although such manufacturing processes increase cost, they improve efficiency and uniformity. By increasing the uniformity of the red waveguide 504 (i.e., the uniformity with which light is transmitted through and out of the waveguide over time), system level efficiency for red light is likewise improved, because less calibration is required.

In the illustrated example, each etched trench (e.g., etched trenches 802, 804, 806) of the grating structure 800 is defined by a neighboring unetched column (e.g., unetched column 808), with the top of the columns occurring at a surface level 815 of the grating structure 800. The etched trenches 802, 804, 806 are modulated in depth from the leftmost to the rightmost - in particular, when considering the etched trenches along the direction 850, the respective depths of the etched trenches 802, 804, 806 decrease, while the pitch 814 remains substantially identical. In this manner, the aspect ratio (the ratio of depth to width of the respective etched trench) decreases for the etched trenches 802, 804, 806 along the direction 850.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A near-eye display system (100), comprising:
a first waveguide (504) configured to guide red light (410) to a user's eye (510); and
a second waveguide (506) configured to guide at least one of blue light (414) and green light (412) to the user's eye (510), wherein the first waveguide (504) is thicker than the second waveguide (506).

2. The near-eye display system (100) of claim 1, wherein:
the first waveguide (504) is positioned closer to the user's eye (510); and
the second waveguide (506) is positioned farther from the user's eye (510) when the near-eye display system (100) is worn by a user.

3. The near-eye display system (100) of claim 1 or claim 2, wherein:
the first waveguide (504) comprises nanostructures (706) that comprise resin (704) having a first refractive index; and
the second waveguide (506) comprises nanostructures (718) that comprise resin (714) having a second refractive index lower than the first refractive index.

4. The near-eye display system (100) of any of claims 1 to 3, wherein:
the first waveguide (504) comprises a substrate (702) having a first refractive index; and
the second waveguide (506) comprises a substrate (712) having a second refractive index lower than the first refractive index.

5. The near-eye display system (100) of any of claims 1 to 4, wherein the first waveguide (504) comprises gratings with continuously modulated depths.

6. The near-eye display system (100) of any of claims 1 to 5, wherein:
the first waveguide (504) comprises gratings having a first number of unique etch depths; and
the second waveguide (506) comprises gratings having a second number of unique etch depths lower than the first number.

7. The near-eye display system (100) of any of claims 1 to 6, wherein the waveguide (506) positioned farthest from the user's eye (510) when the near-eye display system (100) is worn by a user has a metallic coating (716).

8. A method, comprising:
guiding red display light (410) from a display to a user's eye (510) via a first waveguide (504) of a near-eye display system (100); and
guiding at least one of blue display light (414) and green display light (412) from the display to the user's eye (510) via a second waveguide (506) of the near-eye display system (100), wherein the first waveguide (504) is thicker than the second waveguide (506).

## Patentansprüche

1. Near-Eye-Displaysystem (100), umfassend:
einen ersten Wellenleiter (504), der dazu ausgelegt ist, rotes Licht (410) zum Auge (510) eines Benutzers zu leiten; und
einen zweiten Wellenleiter (506), der dazu ausgelegt ist, mindestens eines von blauem Licht (414) und grünem Licht (412) zum Auge (510) des Benutzers zu leiten, wobei der erste Wellenleiter (504) dicker als der zweite Wellenleiter (506) ist.

2. Near-Eye-Displaysystem (100) nach Anspruch 1, wobei:
der erste Wellenleiter (504) näher am Auge (510) des Benutzers positioniert ist; und
der zweite Wellenleiter (506) weiter vom Auge (510) des Benutzers entfernt positioniert ist, wenn das Near-Eye-Displaysystem (100) von einem Benutzer getragen wird.

3. Near-Eye-Displaysystem (100) nach Anspruch 1 oder Anspruch 2, wobei:
der erste Wellenleiter (504) Nanostrukturen (706) umfasst, die Harz (704) mit einem ersten Brechungsindex umfassen; und
der zweite Wellenleiter (506) Nanostrukturen (718) umfasst, die Harz (714) mit einem zweiten Brechungsindex umfassen, der niedriger als der erste Brechungsindex ist.

4. Near-Eye-Displaysystem (100) nach einem der Ansprüche 1 bis 3, wobei:
der erste Wellenleiter (504) ein Substrat (702) mit einem ersten Brechungsindex umfasst; und
der zweite Wellenleiter (506) ein Substrat (712) mit einem zweiten Brechungsindex umfasst, der niedriger als der erste Brechungsindex ist.

5. Near-Eye-Displaysystem (100) nach einem der Ansprüche 1 bis 4, wobei der erste Wellenleiter (504) Gitter mit kontinuierlich modulierten Tiefen umfasst.

6. Near-Eye-Displaysystem (100) nach einem der Ansprüche 1 bis 5, wobei:
der erste Wellenleiter (504) Gitter umfasst, die eine erste Anzahl von eindeutigen Ätztiefen aufweisen; und
der zweite Wellenleiter (506) Gitter umfasst, die eine zweite Anzahl von eindeutigen Ätztiefen aufweisen, die niedriger als die erste Anzahl ist.

7. Near-Eye-Displaysystem (100) nach einem der Ansprüche 1 bis 6, wobei der Wellenleiter (506), der am weitesten vom Auge (510) des Benutzers entfernt positioniert ist, wenn das Near-Eye-Displaysystem (100) von einem Benutzer getragen wird, eine metallische Beschichtung (716) aufweist.

8. Verfahren, umfassend:
Leiten von rotem Displaylicht (410) von einem Display zum Auge (510) eines Benutzers über einen ersten Wellenleiter (504) eines Near-Eye-Displaysystems (100); und
Leiten von mindestens einem von blauem Displaylicht (414) und grünem Displaylicht (412) von dem Display zum Auge (510) des Benutzers über einen zweiten Wellenleiter (506) des Near-Eye-Displaysystems (100), wobei der erste Wellenleiter (504) dicker als der zweite Wellenleiter (506) ist.

## Revendications

1. Système d'affichage proche de l'œil (100), comprenant :
un premier guide d'ondes (504) configuré pour guider la lumière rouge (410) vers un œil de l'utilisateur (510) ; et
un second guide d'ondes (506) configuré pour guider au moins l'une d'une lumière bleue (414) et d'une lumière verte (412) vers l'œil de l'utilisateur (510), dans lequel le premier guide d'ondes (504) est plus épais que le second guide d'ondes (506).

2. Système d'affichage proche de l'œil (100) selon la revendication 1, dans lequel :
le premier guide d'ondes (504) est positionné plus près de l'œil de l'utilisateur (510) ; et
le second guide d'ondes (506) est positionné plus loin de l'œil de l'utilisateur (510) lorsque le système d'affichage proche de l'œil (100) est porté par un utilisateur.

3. Système d'affichage proche de l'œil (100) selon la revendication 1 ou la revendication 2, dans lequel :
le premier guide d'ondes (504) comprend des nanostructures (706) qui comprennent une résine (704) ayant un premier indice de réfraction ; et
le second guide d'ondes (506) comprend des nanostructures (718) qui comprennent une résine (714) ayant un second indice de réfraction inférieur au premier indice de réfraction.

4. Système d'affichage proche de l'œil (100) selon l'une quelconque des revendications 1 à 3, dans lequel :
le premier guide d'ondes (504) comprend un substrat (702) ayant un premier indice de réfraction ; et
le second guide d'ondes (506) comprend un substrat (712) ayant un second indice de réfraction inférieur au premier indice de réfraction.

5. Système d'affichage proche de l'œil (100) selon l'une quelconque des revendications 1 à 4, dans lequel le premier guide d'ondes (504) comprend des réseaux à profondeurs modulées en continu.

6. Système d'affichage proche de l'œil (100) selon l'une quelconque des revendications 1 à 5, dans lequel :
le premier guide d'ondes (504) comprend des réseaux ayant un premier nombre de creux de gravure uniques ; et
le second guide d'ondes (506) comprend des réseaux ayant un second nombre de creux de gravure uniques inférieur au premier nombre.

7. Système d'affichage proche de l'œil (100) selon l'une quelconque des revendications 1 à 6, dans lequel le guide d'ondes (506) positionné le plus loin de l'œil de l'utilisateur (510) lorsque le système d'affichage proche de l'œil (100) est porté par un utilisateur a un revêtement métallique (716).

8. Procédé, comprenant :
le guidage de la lumière d'affichage rouge (410) depuis un affichage vers un œil de l'utilisateur (510) via un premier guide d'ondes (504) d'un système d'affichage proche de l'ceil (100) ; et
le guidage d'au moins l'une d'une lumière d'affichage bleue (414) et d'une lumière d'affichage verte (412) depuis l'affichage vers l'œil de l'utilisateur (510) via un second guide d'ondes (506) du système d'affichage proche de l'œil (100), dans lequel le premier guide d'ondes (504) est plus épais que le second guide d'ondes (506).
